# EUROPEAN PATENT APPLICATION

(11) **EP 4 538 714 A1**
(43) Date of publication of application: **16.04.2025**
(21) Application number: 23202955.3
(22) Date of filing: 11.10.2023
(51) Int. Cl.: G01N 35/00, G01N 35/10

(54) **ROBOTIC SAMPLE HANDLING SYSTEM**

(71) Applicant: Tecan Trading AG, 8708 Männedorf (CH)
(72) Inventor: SCHINZEL, Fred, 8708 Männedorf (CH)
(74) Representative: DeltaPatents B.V.

(57) **Abstract**

In one aspect, the invention relates to a robotic sample handling system comprising a controller and a robotic arm which is controllable to be positioned in a horizontal XY plane parallel to a work area and along a vertical Z-axis perpendicular to the work area. The work area comprises a module which is provided with a moveable element (550) for interacting with a sample container (170). The module is equipped with a mechanism, which comprises:
- a first linear element (210) and a second linear element (220) which extend in vertical direction Z, and which are mounted to the module in a manner which enables each linear element to be moved in a downward and upward direction between a raised position and a lowered position; and
- at least one rotor element (230) which engages with each of the first and second linear elements such that the application of downward force on one of the first and second linear elements, when in a raised position, causes:
• displacement of that linear element in downward direction;
• rotation of the at least one rotor element; and
• displacement of the other linear element in upward direction.

The moveable element (550) is mounted in connection with the rotor element and is displaceable between a first position and a second position. The controller is configured to control the robotic arm to displace the moveable element by pushing downward in Z-direction on one of the first and second linear elements, when in a raised position.

## Description

### TECHNICAL FIELD

The invention relates to a robotic sample handling system for performing sample handling tasks in a laboratory environment, and to a computer-implemented method for controlling a robotic arm of a robotic sample handling system. The invention further relates to a computer-readable medium comprising data representing a computer program for performing the computer-implemented method, and to a module comprising a mechanism which is actuatable by the robotic arm.

### BACKGROUND ART

Robotic sample handling systems are well-known in the field of laboratory automation. Such robotic sample handling systems may be used to automate sample handling tasks, including actions such as handling of sample containers, e.g., by picking-and-placing sample containers on a worktable, and interacting with the samples contained in the containers, e.g., by dispensing liquids into a sample container or by pipetting actions.

An example of a robotic sample handling system is an automated pipetting system, as for example described in US20150251315. Such an automated pipetting system, which may also be simply referred to as a 'pipetting robot', typically comprises a 3-axis robotic arm having a pipetting head to which a tip is attachable for aspirating and dispensing liquid samples. The robotic arm is positioned under control of a controller to a given position so as to carry out a specific action at the given position.

Depending on the number of different sample handling actions to be performed and the different types of sample containers which need to be handled, a robotic sample handling system is often equipped with first and second 3-axis robotic arms. The second 3-axis arm may be configured to pick up and position a sample container such as a microplate. The second arm may comprise a gripper that enables the microplate to be grasped between two clamps and to be rotated to a particular orientation. The presence of a second 3-axis arm increases the cost of a system and adds to the complexity of controlling the movement of two arms.

Sample containers may also be formed by microfluidic devices. Such devices may comprise a rotary valve or cover, which is rotatable between a closed position and an open position in which one or more inlet ports containing a sample become accessible for the dispensing of a liquid by a pipetting head. A robotic arm equipped with a separate rotary actuator may be employed to rotate the valve or cover, which again has the drawback of increasing cost and complexity.

In order to perform other automated sampling tasks with the aid of a simple pipetting robot, a module for interacting with the sample container may be used, whereby the module is equipped with a mechanism which is actuatable by a downward force applied by the robotic arm. An example of such a robotic handling system is disclosed in WO2022010489. The system comprises at least one robotic arm, which is controllable to be positioned in an XY plane parallel to a work area and along a Z-axis perpendicular to the work area. A controller of the system is configured to control the robotic arm to position and operate the robotic arm as part of a sample handling task and is further configured to control the robotic arm to actuate the mechanism by pushing downward in Z-direction. The module may be a stand for a sample container which comprises a push-push mechanism. The mechanism is operated by the robotic arm to bring the sample in the sample container into and out of the vicinity of an effector, such as a magnet or a heat source.

There is still room for improvement in terms of providing a module for use in a robotic sample handling system that enables a variety of actions to be performed in an automated fashion using a simple robotic arm.

### SUMMARY OF INVENTION

A first aspect of the invention provides a robotic sample handling system for performing sample handling tasks in a laboratory environment, comprising:
- a work area for holding samples;
- a robotic arm which is controllable to be positioned in an XY plane parallel to the work area and along a vertical Z-axis perpendicular to the work area;
- a controller configured to control the robotic arm to position and operate the robotic arm as part of a sample handling task;
wherein the work area comprises a module which is provided with a moveable element for interacting with a sample container or a sample handling device, and wherein the module comprises a mechanism which is actuatable by downward force.

The mechanism comprises:
- a first linear element and a second linear element which extend in vertical direction Z, and which are mounted to the module in a manner which enables each linear element to be displaced in a downward and upward direction between a raised position and a lowered position; and
- a rotor element which engages with each of the first and second linear elements such that the application of downward force on one of the first and second linear elements causes displacement of that linear element in downward direction, rotation of the rotor element in one direction of rotation and displacement of the other linear element in upward direction.

The moveable element is mounted in connection with the rotor element and the controller is configured to control the robotic arm to actuate the mechanism by pushing downward in Z-direction on one of the first and second linear elements, when in raised position, so as to effect displacement of the moveable element.

The mechanism is suitably configured such that when one of the first and second linear elements is in an uppermost, fully raised position, the other of the linear elements is in a lowermost, fully lowered position. The controller is suitably configured to control the robotic arm to move downward, to exert a downward force on one of these linear elements when it is in a raised position, preferably in a fully raised position, causing the rotor element to rotate in one direction of rotation. To effect rotation in the opposite direction, the robotic arm is positioned and controlled to exert a downward force on the other linear element. The rotor element is thus rotatable between a first angular position, in which e.g. the first linear element is in a fully raised position, and a second angular position, in which the first linear element is in a fully lowered position.

The moveable element of the module, which is mounted in connection with the rotor element, is thus displaceable between a first position and a second position. The moveable element may be rotationally mounted to the module, so as to be rotational between first and second angular positions, whereby the mechanism is configured such that rotation of the rotor element causes angular displacement of the moveable element. In some examples, the moveable element is rotational about a vertical axis of rotation. In further examples, the moveable element is rotational about an axis that is extends in a horizontal direction Y between first and second linear elements. In still further examples, the movable element is a further linear element which is displaceable between first and second positions in horizontal direction, whereby the further linear element is connected to the rotor element via an arrangement for converting rotation of the rotor element into linear displacement.

In some embodiments, the moveable element comprises a surface for receiving a sample container, such as e.g. a microplate. A module in accordance with the invention can thus be used to tilt the microplate or rotate the microplate between first and second angular positions, or to move the microplate between first and second horizontal positions, via the application of a downward actuating force.

In other embodiments, the moveable element comprises a fitting for interacting with a sample handling device. When the fitting is a rotational fitting, the module may be used to exert a torque on a rotatable part of the device, for example to move the rotatable part from a closed position to an open position, via the application of a downward force on e.g. the first linear element, and to return the rotatable part to a closed position via the application of a downward force on the second linear element. When the fitting is displaceable in linear direction, the module may be used to exert a horizontal force on an actuatable part of a sample handling device, for example to operate a push button.

A sample handling system comprising a module in accordance with the invention thus enables a variety of operations to be performed in an automated manner via the application of a downward actuating force by a simple robotic arm.

In an embodiment, the rotor element of the mechanism is a toothed pinion wheel, which is arranged between the first and second linear elements and is mounted to the module so as to be rotational about an axis that extends in a horizontal direction Y, perpendicular to the vertical direction Z. Each of the first and the second linear elements is suitably provided with a toothed rack, extending in vertical direction Z, which engages with teeth on an outer circumference of the pinion wheel.

In one example of this embodiment, the mechanism further comprises a first bevel gear coupled to the pinion wheel and comprises a second bevel gear, which is arranged so as to be rotational about an axis that extends in vertical direction Z and to engage with the first bevel gear. The moveable element is coupled to the second bevel gear and is thus adjustable between first and second angular positions about a vertical axis of rotation.

In a further embodiment, the rotor element of the mechanism is formed by a cylindrical component which is mounted to the module so as to be rotational about a vertical axis of rotation. The cylindrical element comprises:
- a first slot provided on an outer circumference of the cylindrical component, which extends in angular and vertical direction, whereby the first linear element comprises a protrusion that slidingly engages in the first slot; and
- a second slot provided on the outer circumference, which extends in angular and vertical direction, whereby the second linear element comprises a protrusion that slidingly engages in the second slot.

The moveable element is coupled to the cylindrical component and is thus adjustable between first and second angular positions about a vertical axis of rotation.

In a still further embodiment, the module is equipped with a chainwheel arrangement for converting a downward actuation force on one of the first and second linear elements into displacement of the moveable element about a vertical axis of rotation extending in Z-direction. The mechanism then suitably comprises:
- a first chainwheel mounted to the module so as to be rotational about the vertical axis of rotation, whereby the moveable element is coupled to the first chainwheel;
- second and third chainwheels which, with respect to a horizontal direction Y, are arranged between the first chainwheel and the first and second linear elements, and which are mounted to the module so as to be rotational about an axis of rotation that extends in a direction X, perpendicular to the Y and Z directions; and
- a chain, whereby one end of the chain is connected to the first linear element and an opposite end is connected to the second linear element and whereby the chain is arranged to engage with part of an outer circumference of each of the first, second and third chainwheels.

In embodiments where the moveable element is rotational about a vertical axis of rotation and comprises a surface for supporting or receiving a sample carrier, the module may be used to change an orientation of the microplate. Microplates are typically rectangular in shape and may have e.g. four rows of six microwells, or eight rows of 12 microwells. A microplate may thus be arranged on the work area with a longitudinal or "landscape" orientation, or with a transverse or "portrait" orientation. In some applications, it may be necessary to change the orientation of the microplate, such that it may interact with a further device. The further device may, for example, be a microplate reader for measuring optical properties of samples in the microplate wells.

The use of such a module in a robotic sample handling system removes the need for a second robotic arm that is equipped with a gripper unit and a rotation stage for changing the orientation of the microplate.

In other embodiments where the moveable element is rotational about a vertical axis of rotation, the moveable element may comprise a rotational fitting that is shaped to engage with a rotatable cover of a microfluidic device such as a DNA sequencing chip that is arranged on the work area of the sample handling system. The cover is rotatable from a closed position to an open position, in which at least one inlet port of the chip containing a sample is uncovered. In a subsequent pipetting action, a droplet of liquid can be dispensed into the at least one inlet port. The use of a such module in accordance with the invention thus enables automated opening of the cover of a microfluidic device without the need for a separate rotary actuator. After the dispensing action, the module can also be used to return the cover to closed position.

In the applications described above, where the module is used to change the orientation of a microplate or open and close the cover of a DNA sequencing chip, the required degree of angular rotation between the first and second position is 90 degrees. The mechanism of the module is suitably configured such that displacement of either of the first and second linear elements from fully raised position to fully lowered position effects rotation of the moveable element through 90 degrees. The controller of the system is suitably configured to position the robotic arm over the linear element that is in fully raised position and to move the arm downwards by an amount that brings that linear element to the fully lowered position. As will be understood, the mechanism may be configured to enable a different magnitude of maximum angular displacement, depending on the requirements of an application and/or the controller may be configured to displace the raised linear element in downward direction by an amount that effects rotation of the moveable element by the required amount.

The moveable element may also be rotational about a horizontal axis of rotation.

In a further example of the embodiment where the mechanism comprises a pinion wheel which is rotational about a horizonal axis and is arranged to engage with a toothed rack provided on the first and second linear elements, the moveable element is coupled to the pinion wheel and is thus adjustable between first and second angular positions. When the moveable element comprises a surface for receiving a sample container such as a microplate, the module may thus be used to tilt the surface about the rotation axis of the pinion wheel. This can be advantageous during a pipetting action. In the case of a microplate with wells that have a relatively large diameter, such as a 24-well microplate, tilting of the supporting surface can be applied to reduce the "dead" volume in the wells.

As mentioned, the moveable element may also be a further linear element that is mounted to the module so as to be displaceable back and forth in horizonal direction. In a still further example of the embodiment where the mechanism comprises a pinion wheel that is rotational about an axis extending in horizontal direction Y, the mechanism comprises a second pinion wheel coupled to the first pinion wheel, and the further linear element is provided with a toothed rack extending in direction X, perpendicular to the vertical direction Z and the direction Y of the rotation axis, which engages with teeth of the second pinion wheel. A module equipped with such a further linear element may therefore be used to exert a force in direction Y, so as to e.g. actuate a push button on further device.

The mechanism may thus comprise a number of different, straightforward mechanical arrangements for converting a downward actuation force, applied by the robotic arm, into a horizontal force or a rotational torque, as required. Advantageously, a liquid handling system according to the invention may comprise two or more displaceable modules which are configured for use in different applications such as described above, thereby enabling a variety of different operations to be performed in an automated manner using the robotic arm.

A further aspect of the invention provides a computer-implemented method for controlling the robotic arm of a robotic sample handling system comprising a module in accordance with any of the embodiments described above. The method comprises, by the controller of the robotic sample handling system:
- receiving position data indicative of a position of the module on the work area of the robotic sample handing system;
- controlling the robotic arm to position the robotic arm above the module and to push downward in Z-direction on one of the first and second linear elements, when in raised position, so as to displace the moveable element from a first position to a second position; and
- controlling the robotic arm to push downward on the other of the first and second linear elements, so as to displace the moveable element from the second position to the first position.

The above measures provide a controller which is configured, for example by software, to control the robotic arm to actuate the mechanism of a module which is to be used in a sample handling task by pushing downward in Z-direction. This may for example comprise the controller being configured to recognize and track a position of the module on the work area, to recognize a type of module, and to suitably position the robotic arm above the module before controlling the robotic arm to move downwards in Z-direction so as to displace one of the linear elements from a raised position to a lowered position and actuate the mechanism of the module. Such control may be evoked as part of a sequence of actions which are to be performed by the robotic arm. In examples where the robotic arm comprises a gripper unit, the controller may be additionally configured to pick up the module from a first location on the work area and place it on a second location. The gripper unit may also be used to exert a downward actuating force on the mechanism.

In a preferred embodiment, the controller of the sample handling system is configured to exert a downward actuating force on the raised linear element when a pipetting head is attached to the robotic arm. The pipetting head has a connecting piece for attachment of a disposable tip and the arm is controlled in vertical direction Z such that the downward actuating force is applied via the connecting piece. Suitably, an upper surface of each of the first and second linear elements may be provided with an indentation that is shaped to receive a lower end of the connecting piece.

A further aspect of the invention provides a computer-readable medium comprising transitory or non-transitory data representing a computer program, the computer program comprising instructions for causing a processor system to perform the computer-implemented method.

A further aspect of the invention provides a module for use in a robotic sampling handling system, wherein the module comprises a moveable element which is configured to interact with a sample container or a sample handling device. The module further comprises a mechanism that is actuatable via the application of a downward force in vertical direction Z, so as to effect displacement of the moveable element. The mechanism comprises:
- a first linear element and a second linear element which extend in vertical direction Z, and which are mounted to the module in a manner which enables each element to be moved in a downward and upward direction between a raised position and a lowered position; and
- a rotor element which engages with each of the first and second linear elements such that the application of downward force on one of the first and second linear elements, when in a raised position, causes:
   - displacement of that linear element in downward direction;
   - rotation of the at least one rotor element; and
   - displacement of the other linear element in upward direction,
wherein the moveable element is mounted in connection with the rotor element and is displaceable from a first position to a second position via actuation of one of the first and second linear elements, and is displaceable from the second position to the first position via actuation of the other of the first and second linear elements.

Advantageously, the above measures allow additional types of actions in sample handling tasks to be automated, which previously may have required manual intervention or which necessitated the use of dedicated actuators or the use of a second 3-axis robotic arm.

Modifications and variations of any one of the robotic sample handling systems, modules, computer-implemented (CI) methods and/or computer programs, which correspond to the described modifications and variations of another one of these systems, modules, Cl-methods and/or computer programs, and vice versa, may be carried out by a person skilled in the art on the basis of the present description.

### BRIEF DESCRIPTIONS OF DRAWINGS

These and other aspects of the invention are apparent from and will be elucidated with reference to the embodiments described hereinafter with reference to the accompanying drawings in which:
- Fig. 1a: shows a schematic overview of a robotic sample handling system which is configured to operate one or more modules having a mechanism which is actuatable by downward force;
- Fig. 1b: shows a pipetting head which may be used by a robotic liquid handling system to operate a module having a mechanism which is actuatable by downward force;
- Fig. 1c: shows an example of a paddle gripper;
- Fig. 2a: shows a first example of a module according to the invention comprising a mechanism which may be actuated by downward force;
- Fig. 2b: shows the mechanism of the module depicted in Fig. 2a;
- Fig. 3: shows a second example of a mechanism that may be incorporated in a module according to the invention;
- Fig. 4: shows a third example of a mechanism that may be incorporated in a module according to the invention;
- Fig. 5a: shows a second example of a module in accordance with the invention;
- Fig. 5b: shows the mechanism of the module depicted in Fig. 5a;
- Fig. 6a: shows a third example of a module in accordance with the invention;
- Fig. 6b: shows the mechanism of the module depicted in Fig. 6a;
- Fig. 7a: shows a fourth example of a module in accordance with the invention; and
- Fig. 7b: shows the mechanism of the module depicted in fig. 7a.

It should be noted that items which have the same reference numbers in different Figures, have the same structural features and the same functions. Where the function and/or structure of such an item has been explained, there is no necessity for repeated explanation thereof in the detailed description.

### DETAILED DESCRIPTION OF EMBODIMENTS

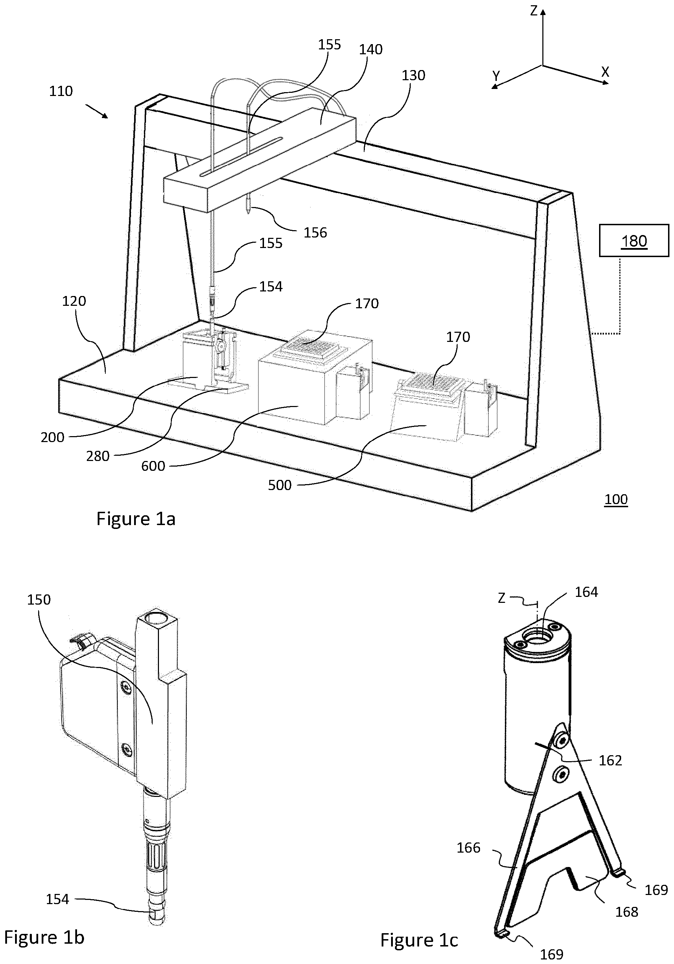

Fig. 1a shows a schematic overview of an example of a robotic sample handling system 100 comprising a robotic sample handling instrument 110 and a controller 180. The robotic sample handling instrument 110, and thereby the robotic sample handling system 100, comprises a work area 120 for holding samples. An example of a work area is a worktable. The robotic sample handling instrument 110 further comprises a robotic arm, which is controllable, by the controller 180, to be positioned in a horizontal plane parallel to the work area and along a vertical axis perpendicular to the work area. For ease of reference, the horizontal plane will be referred to as an XY plane when considering points in the physical space above the work area 120 and as being defined in an XYZ coordinate system, whereby the vertical or Z-axis of the coordinate system is aligned with the direction of gravity. It will be appreciated that while the plane may elsewhere be referred to as an XY plane, the actual control and movement of the robotic arm may take place in a different coordinate system, such as a cylindrical coordinate system. The controller 180 may be physically integrated into the robotic sample handling instrument 110 but may also be an external controller (as shown in Fig. 1a), such as a PC.

In the example depicted in Fig. 1a, the instrument 100 comprises a pipetting robot having a channel arm 140 that extends over the work area in Y-direction and which is mounted to a frame 130 of the instrument so as to be displaceable in X-direction. The channel arm 140 is equipped with first and second pipetting channels, each of which comprises a Z-rod 155, which is displaceable along the vertical Z-axis and which is mounted to the channel arm so as to be displaceable in Y direction. In order to perform pipetting actions, a pipetting head 150 such as shown in Fig. 1b is attachable to the Z-rod. The Z-rod 155 of each pipetting channel may thus be considered as a robotic arm, whereby the controller 180 is suitably configured to position the robotic arm 155 in the XY-plane and along the Z-axis and to operate the associated pipetting channel.

As will be understood, other mounting configurations are possible. For example, the channel arm 140 may be positionable both in X- and in Y-direction in the XY plane (thus having 2 Degrees of Freedom with respect to the XY plane), and the robotic sample handling system may comprise a robotic arm that is configured to perform other sample handling tasks.

The robotic arm is typically provided with an end-effector for performing a particular task. In the example of Fig. 1a, each robotic arm 155 of the robotic sample handling instrument 110 is provided with an end-effector in the form of a pipetting head. Each head comprises a pipette having a connecting piece 154 for attachment of a disposable tip, with Fig. 1a showing such a disposable tip 156 being mounted to one of the two pipettes. In order to mount the tip, the robotic arm 155 with attached pipetting head 150 may be positioned over e.g. a tray that holds at least one disposable tip, and then lowered such that connecting piece 154 is inserted into an opening in the tip to effect attachment of the tip. Pipetting actions such as generally known in the art may then be performed.

The robotic arm 155 with attached pipetting head 150 may also be controlled to pick up a so-called paddle gripper, which is e.g. arranged on a holder (not shown) placed on the work area. An example of a paddle gripper 160 is shown in Fig. 1c. The paddle gripper 160 has a body 162 comprising a through channel that extends along the vertical axis Z. An upper opening 164 of the through channel is adapted to receive the connecting piece 154 of the pipetting head, to enable attachment of the gripper 160 when the connecting piece 154 is pressed into the opening 164. The gripper is further provided with a gripping paddle 166 having a clamping surface 168. To facilitate the support of items when they are picked up, an underside of the gripping paddle 166 may be provided with horizontal portions 169. As will be understood, the Z-rod 155 of each of the first and second pipetting channels, with attached pipetting head, may be controlled to pick up such a paddle gripper 160 and further controlled to move the paddles towards and away from each other to pick up and release an item that is arranged on the work area 120. The item may be a multiwell microplate 170, as depicted in Fig. 1a. After a gripping action, the gripper paddles may be returned to their holder, so that the pipetting head can be controlled to pick up a disposable tip 156 in order to perform a pipetting task. An example of a robotic sample handling instrument comprising a pipetting system which is configured to perform pipetting actions and gripping actions is described in US 111473185.

In general, upward and downward movements along the Z-axis allow the robotic arm to handle sample containers and to interact with samples in those containers. Depending on the task being performed and/or the sample container being handled, it may be necessary to perform additional operations, e.g. to reposition the sample container about the Z-axis, or to apply a torque or linear force in horizonal direction on a further device that is used in a sample handling task. Dedicated actuators and robotic arms with multiple degrees of freedom may be employed to perform additional operations in an automated manner, but this increases equipment costs and increases the complexity of controlling the various movements. Where possible, it is thus beneficial to use a "simple" robotic arm, such as described above, to perform additional operations, but such operations may be difficult for a robotic arm if the operation requires the robotic arm to exert a force in a non-vertical direction, e.g., horizontally, for example to push a button, or turn a handle, etc.

A robotic sample handling system according to the invention comprises a module having a moveable element for interacting with a sample container or sample handling device, whereby displacement of the moveable element is effected via a mechanism which is actuatable by the application of a downward force via the robotic arm. The mechanism is configured to convert downward force into a horizontal force or into a torque and to enable the moveable element to be displaced back and forth between a first position and a second position. In the example of Fig. 1a, the system comprises three such modules 200, 500, 600, which will be described in more detail in the coming passages.

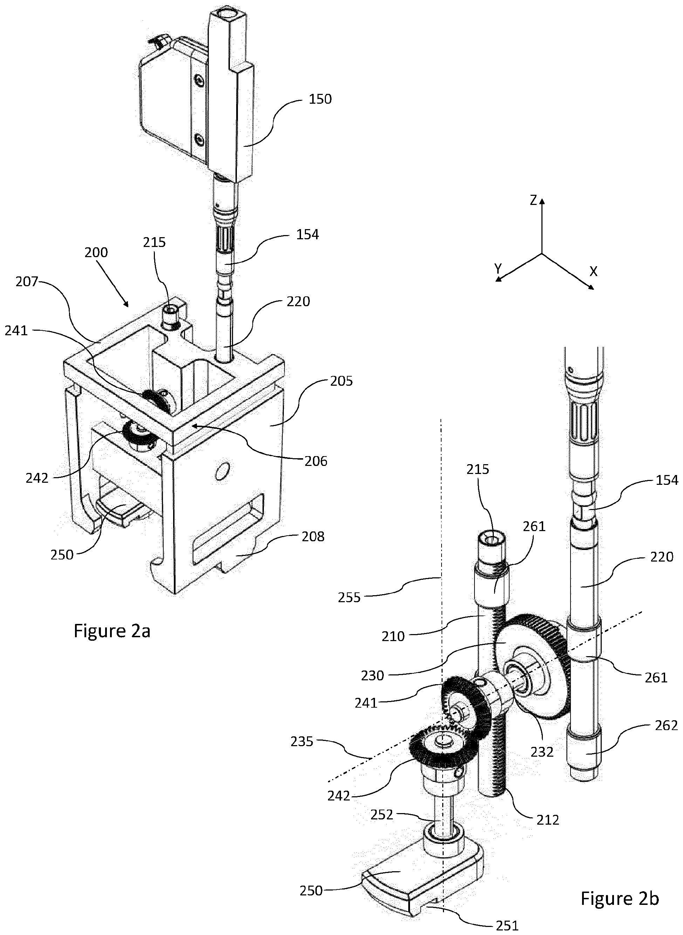

In some applications, the sample container may be a microfluidic device such as a DNA sequencing chip, which is arranged on the work area 120. Typically, the chip is arranged on a holder 280 that it placed on the work area. It is important that such a chip does not dry out and the chip may be provided with a cover that needs to be rotated from a closed position to an open position in order to expose an inlet port and enable a droplet of liquid to be dispensed in an automated pipetting action. In the example of Fig. 1a the module 200 which is shown arranged on the work area 120 is configured to open and close such a cover. The module 200 is shown in more detail in Figure 2a and the mechanism of the module is shown in Fig. 2b.

The module has a frame 205 to which the mechanism and moveable element are mounted. The moveable element is a rotational fitting 250 which is mounted to the frame so as to be rotational about an axis of rotation 255 that extends in vertical direction Z. Suitably, the fitting 250 is coupled to a lower end of a vertically extending shaft 252 that is rotationally supported on the module frame 205 via bearings. The module is configured to be placed over the microfluid device such that the rotational fitting 250 engages a cover of the device that is rotatable between a closed position and an open position. An underside of the rotational fitting (not visible) may comprise a protrusion that is shaped to fit in a corresponding recess of the rotatable cover. Alternatively, the fitting 250 may comprise a recess 251 that fits over a protrusion on the rotatable cover. In one example of a such a microfluidic device, rotation through an angle of 90 degrees moves the cover from the closed position to the open position. It is also important to close the cover again, after a droplet has been dispensed, and the mechanism of the module also enables this.

The mechanism comprises a first linear element 210 and a second linear element 220, each of which is mounted to the frame 205 so as to be displaceable in vertical direction Z between a raised position and a lowered position. These linear elements 210, 220 may be rod-like elements which extend through respective upper guides 261 and lower guides 262 which are fixed to the frame 205 and guide each rod in vertical direction Z.

Suitably, an upper end of each linear element may comprise a lip or other type of stop which is unable to pass through the corresponding upper guide, thereby limiting a stroke of each linear element. Furthermore, the first linear element is provided with a toothed rack 212 that extends in vertical direction Z and the second linear element is provided with a corresponding toothed rack (not visible). The mechanism further comprises a rotor element, executed as a pinion wheel 230 which is mounted to the frame 205 so as to be rotational about an axis of rotation 235 that extends in horizontal direction Y. Suitably, the pinion wheel 230 is coupled to a horizontally extending shaft 232 that is rotationally supported on the frame via bearings. The pinion wheel is arranged between the first and second linear elements 210, 220 such that linear teeth of the corresponding toothed rack 212, which are exposed in a region between the corresponding upper and lower guide 261, 262, engage with teeth of the pinion wheel 230 on an outer circumference thereof.

Suitably, the linear elements 210, 220 and first pinion wheel 230 are further arranged such that when one of the first and second linear elements is in a fully raised position, the other of the first and second linear elements is in a fully lowered position. Thus, the application of a downward force on one of these linear elements, when in a raised position, causes displacement of that linear element in downward direction, which in turn causes rotation of the pinion wheel 230 and causes the other linear element to be displaced in upward direction. In order to convert rotation of the pinion wheel 230 about the axis 235 extending in Y-direction into rotation of the fitting 250 about the axis 255 extending in Z-direction, the mechanism further comprises first and second bevel gears arranged perpendicular to each other. The first bevel gear 241 is coupled to the horizonal shaft 232 and the second bevel gear 242 is coupled to the vertical shaft 252, such that the teeth of each bevel gear engage with each other. The rotational fitting 250 is thus rotatable from a first angular position to a second angular position via the actuation of one of the linear elements when in raised position, and is rotational from the second angular position back to the first angular position via actuation of the other linear element. In the depicted example, the mechanism is configured such that displacement of either linear element from a fully raised position to a fully lowered position effects rotation of the fitting 250 through 90 degrees, to enable the cover of a microfluidic device as described above to be opened and closed. As will be understood, in applications where a smaller or larger degree of angular displacement is required, the engagement length of the toothed racks 212 and/or the number of teeth of the pinion wheel 230 may be adjusted accordingly.

In Figures 2a and 2b, the module and mechanism are shown in a configuration where the second linear element 220 is in raised position and can be pressed downward in order to rotate the fitting 250. Preferably, as shown in Figs 2a and 2b, this is done using a pipetting head 150 that is attached to a robotic arm of the system. Advantageously, a top surface of each linear element may be provided with an indentation 215, as is visible for the first linear element 210, whereby the indentation 215 is shaped to receive a lower end of the connecting piece 154 of the pipette, thereby enhancing stability of the force transfer.

In the application described above, the pipetting head 150 may also be used to pick up a tip, aspirate a fluid and then dispense a droplet of the fluid into the uncovered inlet port of the microfluidic device. The module 200 in the example depicted in Fig 2a which is used to open and close the cover in an automated manner therefore needs to be placed over the microfluidic device, operated to open and close the cover, and needs to be removed from the device to enable the dispensing action.

After the microfluidic device has been placed on the work area 120, the controller 180 of the robotic sample handling 100 system is configured to control and position the robotic arm such that following steps may be performed:
- the module 200 is picked up and placed over the microfluidic device, such that the rotational fitting 250 engages with the rotatable cover, whereby the cover is in a closed position;
- one of the first and second linear elements 210, 220, which is arranged in a raised position, is pressed down via the connecting piece 154 of the pipetting head, causing rotation of the fitting 250 and cover to an open position;
- the module is picked up and placed at a location removed from the microfluidic device;
- a droplet of liquid is dispensed into an inlet port of the microfluidic device;
- the module is picked up from the removed location and replaced over the device, such that the fitting 250 engages with the cover; and
- the other of the first and second linear elements, which is now in raised position, is pressed down so as to rotate the cover back to the closed position.

A system that is equipped with the module 200 thus enables automation of the described sample handling task, thereby enhancing accuracy and repeatability. Furthermore, the operation of opening and closing the rotatable cover of the microfluidic device may be performed by controlling the position of the robotic arm along the Z-axis, without the need for a separate rotary actuator.

In the described example, the robotic sample handling system as shown in Fig. 1a is equipped with one channel arm 140 having first and second pipetting channels, whereby the Z-rod 155 of each channel controlled to pick up and place the module 200 when a paddle gripper 160 is attached to each of the end-effectors, which are executed as pipetting heads 150. To perform the pipetting action, at least one of the grippers is released and a disposable tip 156 is picked up. As will be understood, the channel arm 140 may be equipped with several pipetting channels, whereby the gripping action is, for example, performed by controlling and positioning two pipetting heads with attached grippers 160, while a third pipetting head is controlled and positioned to operate the mechanism and a fourth pipetting head is controlled and positioned to pick up a disposable tip and carry out the pipetting action. Several different configurations are possible. The channel arm may also be equipped with a dedicated gripper unit. In other examples, the sample handling system may be equipped with a second 3-axis robotic arm having a gripper unit that is controlled to pick up and place the module.

To facilitate being picked up, an upper end of the frame 205 of the module may suitably comprise opposing flat surfaces 206, facing in direction X, based on the depicted XYZ coordinate system, which are provided on a support bar 207. Advantageously, the support bar 207 may have an underside, which faces towards the work area for receiving the horizontal portions 169 of a paddle gripper as shown in Fig. 1c.

In the example depicted in Fig. 2a, a lower surface of the module frame 205 is provided at opposite sides in X-direction with an extension 208 (only one of which is visible). As shown in Fig. 1a, the holder 280 may comprise an opening for receiving each extension 208, such that the module 200 is firmly located on the work area 120 and cannot e.g., slide in the XY-plane.

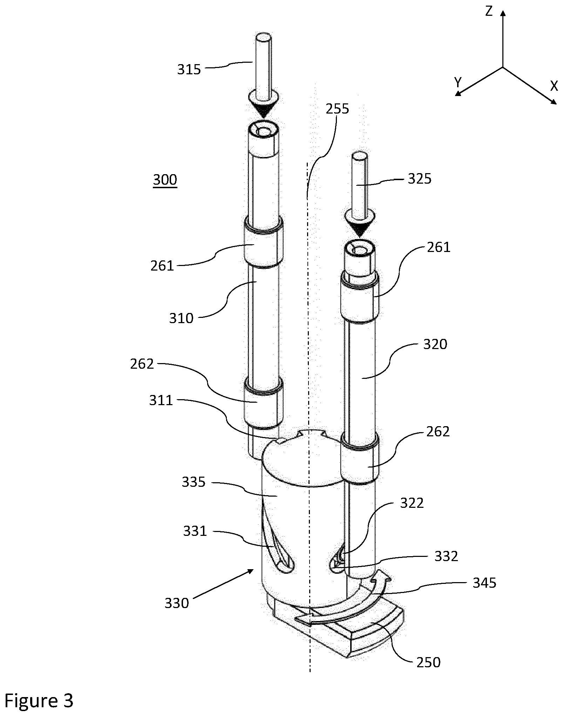

The mechanism of a module in accordance with the invention may be equipped with other types of mechanical arrangements for converting a downward actuating force into rotation of the moveable element. An alternative arrangement is shown in Fig. 3, whereby the moveable element is again a rotational fitting for opening and closing the cover of a microfluidic device such as described above.

The mechanism 300 comprises first and second linear elements 310, 320 which are mounted to the module frame (not shown) so as to be displaceable between a raised position and a lowered position in vertical direction Z. The rotor element in the depicted arrangement is a cylindrical component 330 that is mounted to the frame so as to be rotational about a vertical axis of rotation 255 extending in direction Z. The rotational fitting 250 is coupled to the cylindrical component and rotates therewith.

The component 330 has an outer cylindrical surface 335 in which first and second angular slots are provided. The first slot 331 extends from an upper region of the cylindrical surface 335 to a lower region thereof in downward direction and in a first angular direction. The second slot 332 is provided at an opposite circumferential side and extends from an upper region of the cylindrical surface 235 to a lower region thereof in downward direction and in a second angular direction.

To effect rotation of the cylindrical component 300, a lower end of the first linear element 310 is provided with a protrusion 311 that slidingly engages in the first slot 331 and a lower end of the second linear element 320 is provided with a protrusion 322 that slidingly engages in the second slot 331. In the figure, the first linear element is in raised position and its protrusion is located in an upper end of the first slot 331, which corresponds to a first angular position of the cylindrical component 330. The second linear element 320 is in lowered position and its protrusion 322 is located in a lower end of the second slot 332 in this first angular position. A downward actuating force applied on the first linear element 310, shown by the arrow 315, moves the first linear element in downward direction, which causes the cylindrical component 330 to rotate towards a second angular position, as its protrusion 311 follows the path of the first slot 331 towards a lower end of thereof. In turn, rotation of the cylindrical component causes the protrusion 322 of the second linear element 320 to follow the path of the second slot 332 and is thus moved upwards towards an upper end of the second slot. When the cylindrical component is in the second angular position, it can be returned to the first angular position by applying a downward actuation force on the second linear element 320, as indicated by the arrow 325.

The cylindrical component and the rotational fitting are thus rotatable back and forth between first and second angular positions, as indicated by the arrow 345. In the depicted arrangement, displacement of either linear element from raised position to lowered position effects rotation of the cylindrical component through an angular extent of 90 degrees, such that the fitting 250 may open and close the cover of a microfluidic device in the application as described above. In other applications where a smaller or larger degree of rotation is required, the angular extent of the first and second slots may be adjusted depending on the requirements.

As before, the linear elements may be rod-like components that can be slidingly displaced within upper guides 261 and lower guides 262 that are fixed to the frame. Since there is no need for these linear elements to be provided with a toothed rack that engages with a pinion wheel, the frame may also comprise a tube or a cylindrical opening for receiving and guiding the respective linear element.

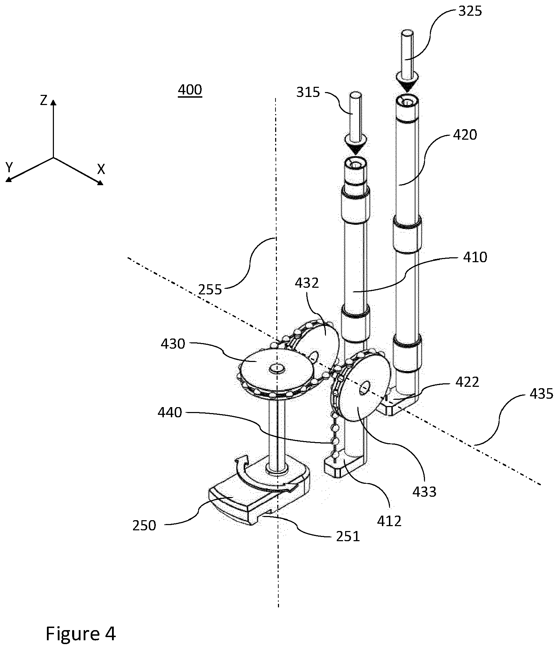

A further example of a mechanism that may be employed for converting downward force into rotation of a moveable element about a vertical axis of rotation is shown in Figure 4. The moveable element of the module is again a rotational fitting 250 for opening and closing the cover of a microfluidic device such as described with reference to Figs. 2a and 2b.

The mechanism 400 comprises first and second linear elements 410, 420 which are mounted to the module frame (not shown) so as to be displaceable between a raised position and a lowered position. The mechanism further comprises a chainwheel arrangement and includes a first chainwheel 430 which is mounted to the frame of the module (not shown) so as to be rotational about a vertical axis of rotation 255 that extends in Z-direction. The rotational fitting 250 is coupled to the first chainwheel 430 and rotates therewith. The arrangement further comprises second and third chainwheels 432, 433 which are mounted to the frame so as to be rotational about a horizontal axis of rotation 435 that extends in X-direction. The second and third chainwheels are arranged between the first chainwheel and the first and second linear elements, with respect to the Y-direction in the depicted coordinate system.

The chain 440 of the chainwheel arrangement may be a ball chain, as in the depicted example, or a link chain. One end of the chain 440 is affixed to a lower end of the first linear element 410. An opposite end of the chain is affixed to a lower end of the second linear element 420. The lower end of each linear element may comprise a corresponding foot 412, 422 that extends somewhat in Y-direction, to which the respective ends of the chain are attached. An outer circumference of each chainwheel is provided with indentations which receive the balls of the depicted ball chain. In other examples, the chainwheels may be provided with teeth or protrusions for receiving the links of a link chain. The chain is looped around the first chainwheel 430 and over the second and third chainwheels, such that when, as shown in Fig. 4, the second linear element 420 is in raised position, the application of a downward actuating force (indicated via the arrow 325) causes the first chainwheel 430 and the rotational fitting 250 to be rotated from a first angular position to a second angular position. The second first linear element 410 gets pulled up from its lowered position to its raised position and the application of a downward actuating force on the first linear element (indicated via the arrow 315) enables the rotational fitting 250 to be returned to the first angular position.

The rotatable cover of a microfluid device such as described above can therefore be moved from a closed position to an open position and restored to the closed position.

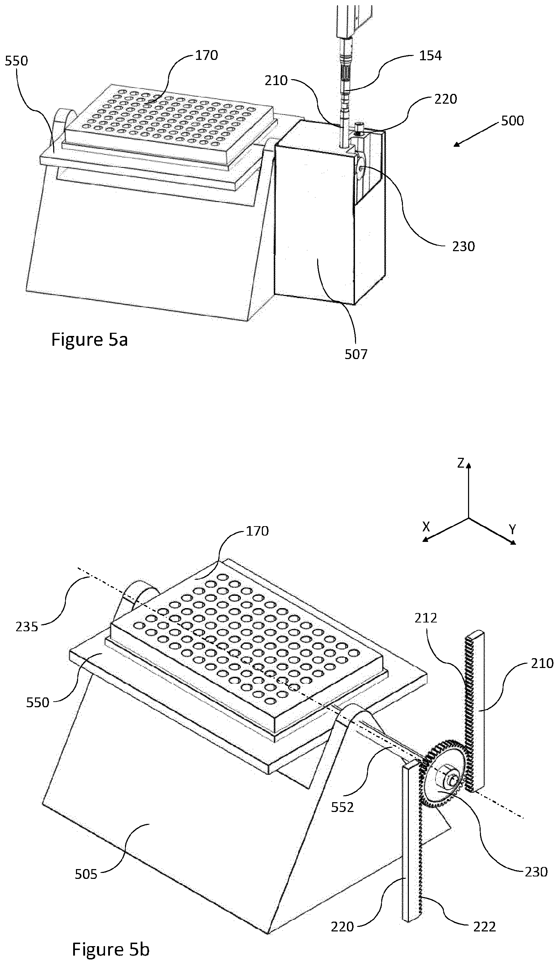

In other embodiments, the moveable element of the module comprises a surface for receiving a sample container such as e.g. a microplate, thereby enabling the sample container to be moved between a first position and a second position via the application of a downward actuating force. One example of such a module is depicted in Figures 5a and 5b, whereby 5a shows the module as whole being actuated by the connecting piece 154 of a pipetting head and Fig. 5b shows the module with a housing part removed, such that the mechanism is visible.

The module 500 comprises a stand 505 which may be placed on the work area of a robotic sample handling system such as shown in Fig. 1a. The module further comprises a platform 550 that is mounted to the stand so as to be pivotable about an axis 235 that extends in horizontal direction Y, perpendicular to the vertical direction Z. In the depicted example, the platform 550 is configured to support or receive a multiwell microplate 170 for use in pipetting actions, and is pivotable back and forth between first and second positions. The mechanism which converts the downward actuating force into rotation around the axis 235 comprises a rack and pinion arrangement, similar to the mechanism described with reference to Figs. 2a and 2b. The first and second linear elements 210, 220 are provided with a corresponding toothed rack 212, 222 which engage with the teeth of a pinion wheel 230. The pinion wheel 230 is suitably mounted on a shaft 552 that is rotationally supported on the module via bearings, whereby the platform 550 is coupled to the shaft 552 and rotates therewith. As will be understood, the module further comprises a housing part 507 to which upper and lower guides are affixed, for receiving and guiding each linear element 210, 220 between a raised and a lowered position.

A module as depicted in Fig. 5a may thus be used to tilt the microplate 570 that is received on the pivotable platform 550 by applying a downward force on one of the first and second linear elements when it is in a raised position. The robotic arm of the system with e.g. attached pipetting head is suitably controlled to displace the raised linear element - the first linear element 510 as shown in Fig. 5b - in downward direction by an amount that causes the platform to pivot about the axis 235 through e.g. 20 - 45 degrees. This is advantageous for reducing so-called dead volumes, which refers to the residual volume of liquid left in the wells of the microplate, or lost to waste, which cannot be used in an application due the risk of aspirating air. High dead volumes may be undesirable when pipetting valuable liquids such as enzymes or antibody solutions. Typically, a microplate is supported on the work area, on the horizontal XY-plane. The geometry of the wells is a main factor that influences the dead volume. Wells which are relatively deep and conical in shape may have a relatively low dead volume. In applications where the microplate wells are shallower, and relatively large in diameter, such as in e.g. a 24-well microplate, the dead volume will be greater. Titling such a microplate therefore increases the available liquid depth and reduces the dead volume. After automated pipetting has been performed, the platform 550 is suitably restored to the horizontal position by applying a downward force on the other linear element - the second element 220 in the example of Fig. 5b - so that the microplate 170 may be reliably picked up by e.g. gripper paddles.

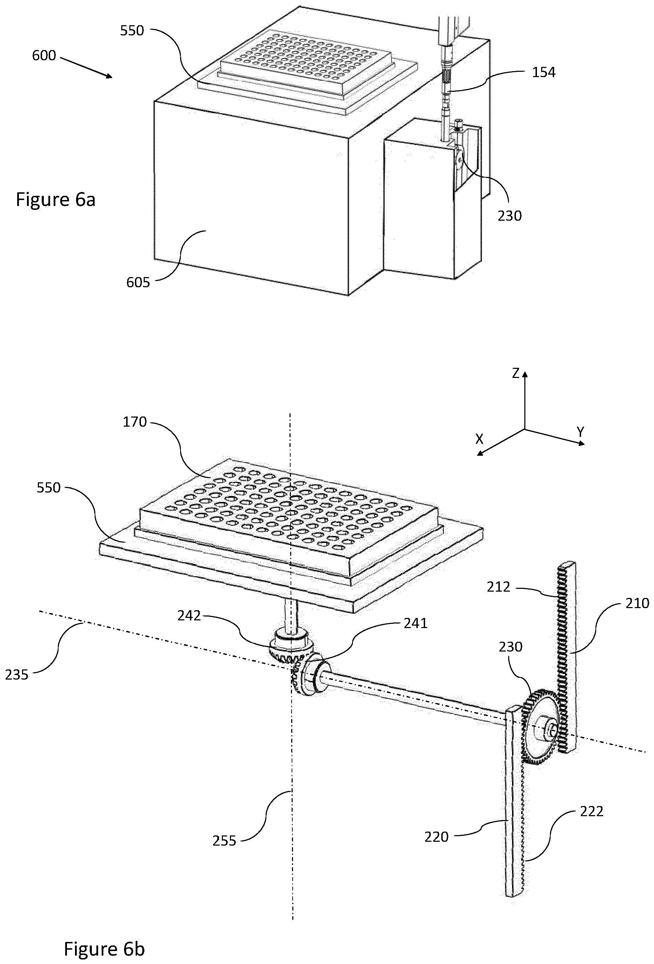

In a further embodiment of a module according to the invention in which the movable element is a platform for receiving a sample container such as a microplate, the mechanism is configured to effect rotation of the platform about a vertical axis of rotation. An example of such a module is depicted in Figure 6a, whereby the mechanism is shown in Fig. 6b.

The module 600 comprises a stand 605 which may be placed on the work area of a robotic sample handling system such as shown in Fig. 1a. The platform 550 for receiving e.g. a microplate 170 is rotationally supported on the stand 605, so as to be rotational about a vertical rotation axis 255. The mechanism of the module 600 operates according to the same principle as described with reference to Figs. 2a and 2b and comprises first and second linear elements 210, 220 provided with a corresponding toothed rack 212, 222, a pinion wheel 230 and an arrangement of first and second bevel gears. The first bevel gear 241 and the pinion wheel 230 are mounted to the stand 605 so as to be rotational about a horizontal axis 235, perpendicular to the vertical direction Z. The platform 550 is coupled to the second bevel gear 242, which is mounted to the stand so as to be rotational about the vertical axis 255, whereby the teeth of the second bevel gear are in meshing engagement with the teeth of the first bevel gear.

In Fig. 6b, the platform 550 is shown in a first angular position, whereby the first linear element 210 is in raised position and the second linear element 220 is in lowered position. The application of a downward actuating force on the first linear element 210 displaces the linear element to a lowered position, which causes the platform 550 to rotate to a second angular position, and causes the second linear element 220 to be displaced from lowered position to raised position. Suitably, the mechanism is configured such that displacement of either linear element from raised to lowered position effects rotation of the platform 650 through 90 degrees. This enables the orientation of the microplate 170 to be changed.

The microplates used in pipetting operations are typically rectangular in shape. In the depicted example, the microplate 570 is a 96-well plate comprising 8 rows of 12 wells. In some applications, the sample handling system may be configured such that a pipetting operation is performed when the microplate is oriented lengthwise on the work area. This will be referred to as landscape orientation. In order for the microplate to interact with a further device, it can be necessary to change the orientation of the microplate to portrait orientation by rotating it through 90 degrees. An example of a further device is a microplate reader for detecting optical properties of fluids, which is arranged side-on with respect to the robotic sample handling instrument.

A known method of doing this in an automated fashion is to use a gripper device that can be rotated about a vertical axis. In many systems, however, the robotic arm is not equipped with a rotation stage. The angular position of a microplate or other item of labware that is received on the platform 550 of a module 600 such as shown in Fig. 6a may thus be changed via a downward actuating force applied by e.g. the connecting piece 154 of pipetting head that is attached to a "simple" robotic arm. As will be understood, the mechanism used in such a module may alternatively comprise a cylindrical component with angular slots or an arrangement of chainwheels such as described with reference to Fig. 3 and Fig. 4 respectively.

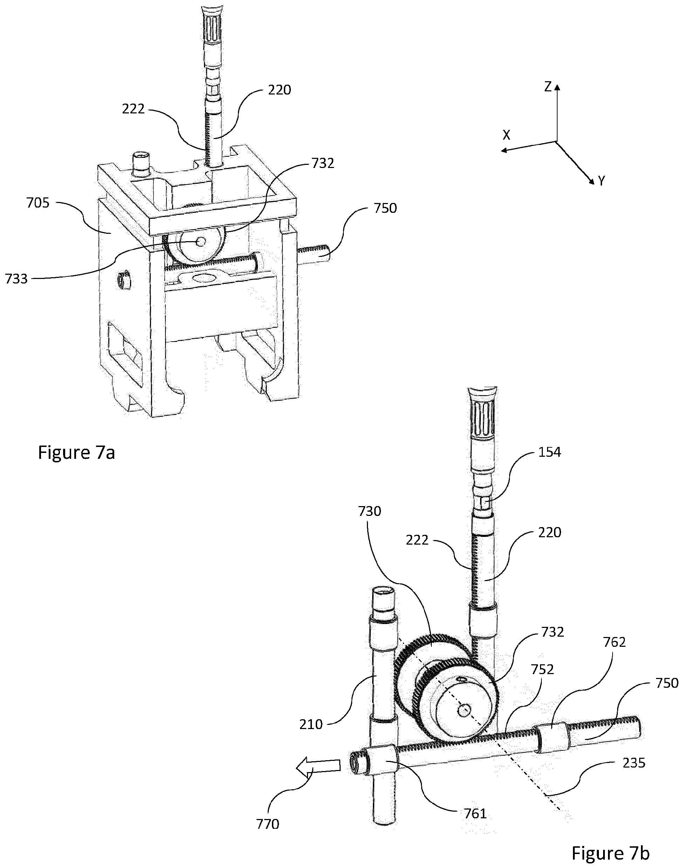

In a still further embodiment, a module in accordance with the invention is equipped with a moveable element that is displaceable between first and second positions in horizontal direction. An example of such a module is shown in Fig. 7a, whereby the associated mechanism is shown in Fig. 7b.

The module in the depicted example has a frame 705 which is similar in shape as that described with reference to the embodiment of Figs. 2a and 2b and also comprises first and second linear elements 210, 220 which are mounted to the frame 705 in a similar fashion. The mechanism comprises a first pinion wheel 730 that is arranged to engage with the corresponding toothed rack 212 of the linear elements such that displacement of either element in vertical direction Z causes rotation of the first pinion wheel 730 and of a shaft 733 on which the first pinion wheel is mounted. The mechanism further comprises a second pinion wheel 732, which is mounted on the same shaft 733 and rotates therewith about an axis of rotation 235 that extends in horizontal direction Y. The moveable element is a further linear element 750 that is mounted to the frame 705 so as to be displaceable in horizontal direction X, perpendicular to the rotation axis 735. The further linear element may be slidingly received in first and second guides 761, 762 that are spaced from each other in direction X and is suitably provided with a toothed rack 752 that engages with teeth of the second pinion wheel 732.

As shown in the figures, the connecting piece 154 of a pipetting head may be used to apply a downward actuating force on the second linear element 220, which is in raised position, which causes the further linear element 750 to be moved in the direction indicated by the arrow 770. A horizontal force may thus be applied on e.g. a pushbutton of a device that is arranged on the work area next to the module 700, so as to activate the device.

A module in accordance with the invention therefore enables a wide variety of movements to be performed by controlling the downward movement a simple robotic arm.

In general, the controller may be configured, e.g., by hardware design or software, to perform the operations described in this specification in as far as pertaining to the control of the robotic arm. The controller may be embodied by an external computer, e.g., a PC or laptop or workstation, which may be connected via a communication interface, such as an USB interface or any other serial or parallel interface or a local network interface or personal network interface, to the robotic sample handling instrument to which the robotic arm(s) are attached. Here, the adjective 'external' may refer to the controller not being part of the robotic sample handling instrument. In some other embodiments, the controller may be embodied by an embedded computer which may be part of the robotic sample handling instrument.

In general, the controller may comprise one or more (micro)processors which execute appropriate software, such as one or more x86 or ARM-based processors (CPUs), but also by a combination or system of such processors and/or other types of processing units. Software implementing the functionality of the controller may have been stored in a corresponding memory or memories, e.g., in volatile memory such as RAM or in nonvolatile memory such as Flash. Alternatively, the functionality of the controller may be implemented in the form of programmable logic, e.g., as a Field-Programmable Gate Array (FPGA). In general, the controller may be implemented as one or a combination of circuits. In general, the controller may be implemented in a distributed manner, e.g., distributed over different servers or distributed according to a client-server model. The controller may also be implemented remotely, e.g., by control software running on one or more cloud-based servers.

It is noted that any of the computer-implemented methods described in this specification, for example in any of the claims, may be implemented as software, as dedicated hardware, or as a combination of both. Instructions for the computer, e.g., executable code, may be stored on a computer readable medium, e.g., in the form of a series of machine-readable physical marks and/or as a series of elements having different electrical, e.g., magnetic, or optical properties or values. The executable code may be stored in a transitory or non-transitory manner. Examples of computer readable mediums include memory devices, optical storage devices, integrated circuits, etc.

It should be noted that the above-mentioned embodiments illustrate rather than limit the invention, and that those skilled in the art will be able to design many alternative embodiments.

## Claims

1. A robotic sample handling system (100) for performing sample handling tasks in a laboratory environment, comprising:
- a work area (120) for holding samples;
- a robotic arm (155) which is controllable to be positioned in a horizontal XY plane parallel to the work area and along a vertical Z-axis perpendicular to the work area;
- a controller (180) configured to control the robotic arm to position and operate the robotic arm as part of a sample handling task;
wherein the work area comprises a module (200, 500, 600) which is provided with a moveable element (250, 550) for interacting with a sample container (170) or a sample handling device, and wherein the module comprises a mechanism which is actuatable by downward force,
**characterized in that** the mechanism comprises:
- a first linear element (210, 310, 410) and a second linear element (220, 320, 420) which extend in vertical direction Z, and which are mounted to the module in a manner which enables each linear element to be moved in a downward and upward direction between a raised position and a lowered position; and
- at least one rotor element (230, 330, 430, 730) which engages with each of the first and second linear elements such that the application of downward force on one of the first and second linear elements, when in a raised position, causes:
• displacement of that linear element in downward direction;
• rotation of the at least one rotor element; and
• displacement of the other linear element in upward direction,
wherein the moveable element (250, 550) is mounted in connection with the rotor element and is mounted to the module so as to be displaceable between a first position and a second position, and wherein the controller (180) is configured to control the robotic arm (155) to actuate the mechanism and displace the moveable element by pushing downward in Z-direction on one of the first and second linear elements, when in a raised position.

2. The robotic sample handling system (100) according to claim 1, wherein moveable element (250, 550) is mounted to the module so as to be rotational about a vertical axis of rotation (255) that extends in vertical direction Z.

3. The robotic sample handling system (100) according to claim 1, wherein moveable element (550) is mounted to the module so as to be rotational about an axis of rotation (235) that extends in a horizontal direction Y between the first and second linear elements.

4. The robotic sample handling system of any preceding claim, wherein:
- the rotor element of the mechanism is a toothed pinion wheel (230, 730) which is mounted to the module (200, 500, 600) so as to be rotational about an axis (235) that extends in a horizontal direction Y, perpendicular to the vertical direction Z; and
- each of the first and the second linear elements is provided with a toothed rack (212, 222), extending in vertical direction Z, which engages with teeth on an outer circumference of the pinion wheel.

5. The robotic sample handling system (100) according to claim 4, dependent on claim 2, wherein the mechanism further comprises:
- a first bevel gear (241) coupled to the pinion wheel (230);
- and a second bevel gear (242), which is arranged so as to be rotational about an axis (255) that extends in vertical direction Z and is further arranged to engage with the first bevel gear;
and wherein the moveable element (250, 550) is coupled to the second bevel gear.

6. The robotic sample handling system (100) according to claim 2, wherein the rotor element of the mechanism (300) is formed by a cylindrical component (330) which is mounted to the module so as to be rotational about a vertical axis of rotation (255), and wherein the cylindrical element comprises:
- a first slot (331) provided on an outer circumference (235) of the cylindrical component, which extends in angular and in vertical direction, whereby the first linear element (310) comprises a protrusion (311) that slidingly engages in the first slot; and
- a second slot (332) provided on the outer circumference, which extends in angular and vertical direction, whereby the second linear element (320) comprises a protrusion (322) that slidingly engages in the second slot;
- and wherein the moveable element (250) is coupled to the cylindrical component (330).

7. The robotic sample handling system (100) according to claim 2, wherein the mechanism (400) comprises:
- a first chainwheel (430) mounted to the module so as to be rotational about a vertical axis of rotation (255), whereby the moveable element (250) is coupled to the first chainwheel;
- second and third chainwheels (432, 433) which, with respect to a horizontal direction Y, are arranged between the first chainwheel and the first and second linear elements (410, 420), and which are mounted to the module so as to be rotational about an axis of rotation (435) that extends in a horizontal direction X, perpendicular to the Y and Z directions; and
- a chain (440), whereby one end of the chain is connected to the first linear element (410) and an opposite end is connected to the second linear element (420) and whereby the chain is arranged to engage with part of an outer circumference of each of the first, second and third chainwheels.

8. The robotic sample handling system (100) according to claim 4, dependent on claim 3, wherein the moveable element (550) is rotationally coupled to the pinion wheel (230).

9. The robotic sample handling system (100) according to any preceding claim, wherein the moveable element (550) of the module (200, 500, 600) is a platform for supporting or receiving a sample container such as a microplate (170).

10. The robotic sample handling system according to any of claims 1-8, wherein the moveable element is a rotational fitting (250) that is shaped to engage with a rotatable part of a sample handling device.

11. The robotic handling system of claim 4, dependent on claim 1, wherein the moveable element is a further linear element (750) which is mounted to the module so as to be displaceable back and forth in horizontal direction X, and wherein:
- the mechanism further comprises a second pinion wheel (732) coupled to the first pinion wheel (730); and
- the further linear element (750) is provided with a toothed rack (752) extending in direction X, which engages with teeth of the second pinion wheel (732).

12. The robotic sample handling system (100) according to any preceding claim, wherein the robotic arm (155) comprises a pipetting head (150) having a connecting piece (154) for attachment of a disposable tip, and wherein the controller (180) is configured to control the robotic arm (155) to actuate the mechanism of the module (200, 500, 600) via the connecting piece.

13. A computer-implemented method for controlling the robotic arm (155) of a robotic sample handling system (100) according to any one of claims 1 to 12, the method comprising, by the controller (180) of the robotic sample handling system:
- receiving position data indicative of a position of the module (200, 500, 600) on the work area (120) of the robotic sample handing system;
- controlling the robotic arm (155) to position the robotic arm above the module and to push downward in Z-direction on one of the first and second linear elements (110, 210, 310; 220, 320, 420), when in raised position, so as to displace the moveable element (250, 550, 750) from a first position to a second position; and
- controlling the robotic arm to push downward on the other of the first and second linear elements, so as to displace the moveable element from the second position to the first position.

14. A computer-readable medium comprising transitory or non-transitory data representing a computer program, the computer program comprising instructions for causing a processor system to perform the method according to claim 13.

15. A module (200, 500, 600) for use in a robotic sampling handling system (100), wherein the module comprises a moveable element (250, 550, 750) which is configured to interact with a sample container (170) or a sample handling device, the module further comprising a mechanism that is actuatable via the application of a downward force in vertical direction Z, so as to effect displacement of the moveable element, **characterized in that** the mechanism comprises:
- a first linear element (210, 310, 410) and a second linear element (220, 320, 420) which extend in vertical direction Z, and which are mounted to the module in a manner which enables each element to be moved in a downward and upward direction between a raised position and a lowered position; and
- a rotor element (230, 330, 430, 730) which engages with each of the first and second linear elements such that the application of a downward actuating force on one of the first and second linear elements, when in a raised position, causes:
• displacement of that linear element in downward direction;
• rotation of the rotor element; and
• displacement of the other linear element in upward direction,
wherein the moveable element is mounted in connection with the rotor element and is displaceable from a first position to a second position via actuation of one of the first and second linear elements, and is displaceable from the second position to the first position via actuation of the other of the first and second linear elements.
